# FASCICULE DE BREVET EUROPEEN

(11) **EP 1 953 067 B1**
(45) Date de publication et mention de la délivrance du brevet: **18.05.2011**
(21) Numéro de dépôt: 08150198.3
(22) Date de dépôt: 11.01.2008
(51) Int. Cl.: B62D 25/10, B60R 21/34

(54) **Structure de capot avant de véhicule**
Vordere Kühlerhaubenstruktur eines Fahrzeugs
Front bonnet structure of a vehicle

(30) Priorité: 31.01.2007 FR 0752977
(43) Date de publication de la demande: 06.08.2008
(73) Titulaire: PEUGEOT CITROËN AUTOMOBILES S.A., 78140 Vélizy Villacoublay (FR)
(72) Inventeur: Brefort, Laurent, 78280, GUYANCOURT (FR)
(74) Mandataire: Allain, Laurent

(56) Documents cités:
- EP-A- 1 527 984
- EP-A1- 1 357 018
- WO-A-99/01314
- DE-A1- 4 401 041
- FR-A1- 2 838 703
- GB-A- 2 399 550

## Description

La présente invention concerne une structure de capot avant de véhicule, en particulier de véhicule automobile.

Le nombre de décès et la gravité des blessures subies par les piétons lors d'accidents avec des véhicules automobiles ne cessent de croître. Les accidents sont particulièrement fréquents en zone urbaine. Même lorsque les voitures roulent à des vitesses relativement réduites, des blessures très graves peuvent être provoquées lors d'une collision avec un véhicule en mouvement, notamment lors d'un choc avec les structures frontales du véhicule. Au dessous d'une vitesse de 40 Km/h environ, il est pourtant possible d'atténuer considérablement la gravité des blessures en modifiant la structure des parties frontales des véhicules.

Une directive européenne, relative à la protection des piétons et autres usagers vulnérables de la route en cas de collision avec un véhicule à moteur, vise tout particulièrement les surfaces frontales des véhicules, autrement dit principalement le capot avant et le pare-chocs.

En ce qui concerne le capot avant, les constructeurs automobiles développent de nouvelles structures susceptibles de mieux protéger la tête du piéton et de diminuer les effets et conséquences d'une collision.

On connaît déjà, selon la demande de brevet français 2 838 703, une structure de capot avant pour véhicule automobile qui comporte une peau extérieure et une doublure intérieure reliée à la périphérie de la peau du capot, notamment par sertissage. La doublure est en contact avec le coeur de la peau, c'est-à-dire à l'intérieur de la périphérie de la peau, uniquement par des pattes de maintien présentant une caractéristique élastique en cas d'effort sur le capot et disposées de manière symétrique par rapport à l'axe longitudinal du capot. Chaque patte de maintien présente une forme d'une portion bombée dirigée en direction de la peau directement à partir de la doublure qui se prolonge par une partie rectiligne sur laquelle est disposée un moyen de fixation avec la peau du capot. De plus, les pattes de maintien sont réalisées par des pattes saillantes de la doublure formant ainsi une pièce unique. Une telle structure, connue de l'art antérieur, permet une relative diminution de la raideur locale du capot pour limiter les lésions d'un piéton en cas de collision avec le capot tout en conservant une raideur globale inchangée permettant d'assurer les autres fonctions classiques d'un capot. Toutefois, une telle structure perd un peu d'inertie et de cohésion.

Le document WO 99/01314 décrit une structure de capot avant de véhicule selon le préambule de la revendication 1.

Le but de la présente invention est de réaliser une structure perfectionnée de capot avant de véhicule, en particulier de véhicule automobile, qui permette d'améliorer, de façon importante, les résultats des procédures d'essais réglementaires en réponse aux exigences de la réglementation européenne relative au « choc piéton ».

Un autre but de la présente invention est de réaliser une telle nouvelle structure de capot avant de véhicule, qui permette de garder l'inertie et une bonne cohésion du capot avant tout en ayant une souplesse suffisante pour le choc piéton.

Enfin, c'est également un but de la présente invention de réaliser une telle nouvelle structure, qui soit de conception et de fabrication simple, et qui soit économique.

Pour parvenir à ces buts, la présente invention propose une nouvelle structure de capot avant de véhicule, en particulier de véhicule automobile selon la revendication 1.

De préférence, la forme bombée est de section sensiblement en arc de cercle, le rayon de courbure de la section sensiblement en arc de cercle est relativement grand par rapport à l'épaisseur de ladite section.

De manière préférentielle, la forme bombée est réalisée par une partie saillante de la doublure intérieure, de manière à former une pièce unique avec ladite doublure intérieure.

Selon un mode particulier de réalisation de l'invention, la zone de découpe centrale est formée de deux découpes, qui sont symétriques par rapport à l'axe longitudinal du capot avant.

De préférence, des zones de maintien, de petites dimensions, sensiblement planes, sont prévues pour être en contact avec l'intérieur de la peau, et permettre de lier la peau extérieure à la doublure intérieure.

A titre d'exemple non limitatif de l'objet de l'invention, il peut être prévu trois zones de maintien : une zone de maintien située sur la partie de la doublure séparant les deux découpes centrales, et deux zones de maintien situées sur les deux parties de la forme bombée les plus éloignées de ladite partie séparant les deux découpes centrales, respectivement.

De manière préférentielle, la forme bombée est obtenue par emboutissage de la doublure dans sa partie centrale.

De manière préférentielle également, il est prévu, au bord des découpes centrales, des tronçons de demi canaux, qui sont monoblocs avec la doublure intérieure et destinés au guidage et au support de tuyaux du lave vitre du véhicule.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue schématique de dessous d'une structure de capot avant, selon la présente invention, et
- la figure 2 est une vue en perspective, en détail, d'un tronçon de forme bombée, selon la présente invention.

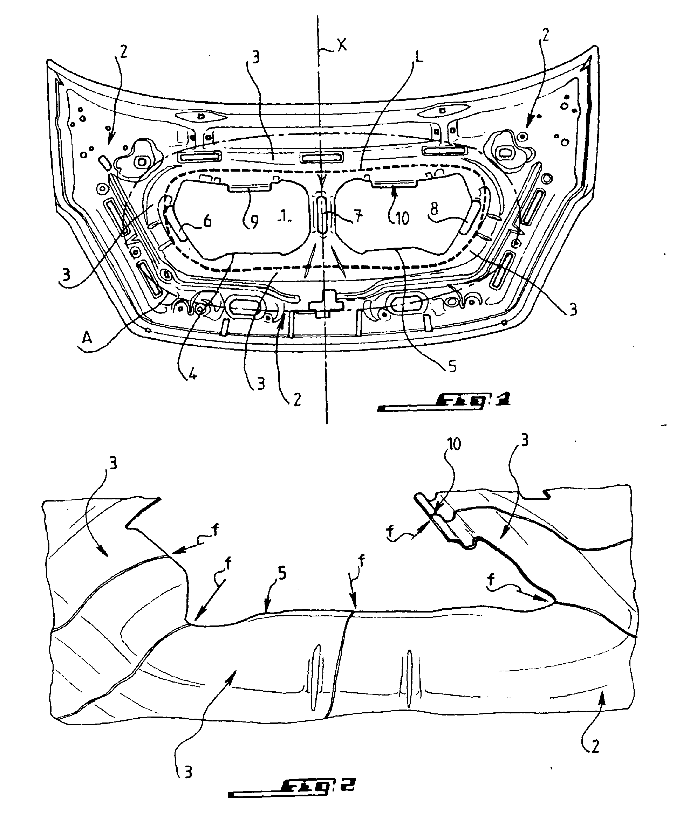

En référence au dessin de la figure 1, on a représenté la face interne d'un capot avant de véhicule automobile, qui comporte, de manière connue en soi, une peau extérieure 1 réalisée en acier ou en aluminium ou en un matériau métallique similaire, et une doublure intérieure 2 réalisée dans le même matériau et reliée à la périphérie de la peau extérieure 1 du capot, par sertissage ou tout autre procédé équivalent connu en soi.

Il est prévu à l'intérieur de la périphérie du capot, c'est-à-dire dans la partie centrale de la doublure intérieure 2 délimitée par la ligne A en traits interrompus mixtes, une forme bombée 3 qui s'étend sensiblement selon un chemin qui suit une ligne continue référencée L et représentée en traits interrompus courts. Cette forme bombée 3 fait saillie de la doublure 2 vers la face interne de la peau extérieure 1. Elle est de section sensiblement en arc de cercle pour conférer une forme sensiblement cylindrique aux différents tronçons de la forme bombée 3. Du fait de sa section en arc de cercle, la forme bombée 3 est appelée aussi forme cylindrique ou forme bombée cylindrique 3.

La forme bombée cylindrique 3, continue, dans la zone centrale A de capot, est réalisée par une partie saillante de la doublure intérieure 2, de manière à former une pièce unique avec la doublure intérieure 2. Elle est obtenue, de préférence, par emboutissage de la plaque métallique constitutive de la doublure intérieure 2 elle-même. Elle s'étend selon un chemin qui suit une ligne continue L, de préférence fermée, qui entoure une zone centrale ajourée de la doublure intérieure 2. Dans l'exemple de réalisation représenté sur la figure 1, cette zone centrale ajourée comporte deux découpes 4 et 5, situées de façon symétrique par rapport à l'axe longitudinal X du capot avant.

Le rayon de courbure de la section en arc de cercle de la forme bombée cylindrique 3 est un paramètre important. Un rayon relativement grand permet à la forme bombée 3 une déformation plus facile que si le rayon était petit. Le dimensionnement précis du rayon de courbure est effectué de manière à rendre optimal l'amortissement du choc piéton. La figure 2 représente une partie de la forme bombée cylindrique 3 à la périphérie de la découpe centrale 5, dans laquelle on a illustré par des flèches « f » les efforts et lignes de déformation lors d'un choc piéton. Ainsi, on comprend que la forme cylindrique de la forme bombée d'emboutissage 3 permet une déformation plus facile.

Des zones à surface plane, de petites dimensions, désignées par les références 6, 7 et 8 sont prévues sur la doublure intérieure 2, et constituent des zones de maintien entre la doublure intérieure 2 et la peau extérieure 1 du capot. Ce sont des zones de liaison entre la peau 1 et la doublure 2 par un mastic de calage, selon un procédé connu en soi.

Dans l'exemple de réalisation non limitatif de l'objet de l'invention représenté sur la figure 1, il est prévu trois zones de maintien: une zone de maintien 7 située sur la partie de la doublure intérieure 2 séparant les deux découpes centrales 4 et 5, et deux zones de maintien 6, 8, situées à la périphérique des découpes centrales 4, 5, respectivement, sur les parties de la forme bombée 3 les plus éloignées de ladite partie séparant les deux découpes centrales 4, 5. Les zones de maintien 6, 7 et 8 sont également obtenues par emboutissage de la plaque métallique constitutive de la doublure intérieure 2, et sont, par conséquent, « monoblocs » avec la doublure intérieure 2.

Les références 9 et 10 désignent des tronçons de demi canaux, à la périphérie des découpes centrales 4 et 5, respectivement. Ces tronçons de demi canaux sont destinés au guidage et au support de tuyaux de lave vitre du véhicule. Ils sont également obtenus par emboutissage de la plaque métallique constitutive de la doublure intérieure 2, et sont, par conséquent, « monoblocs » avec la doublure intérieure 2.

La structure de capot avant de véhicule présente de nombreux avantages, parmi lesquels les avantages suivants :
- grâce à sa forme bombée cylindrique emboutie, elle permet d'obtenir une déformation favorable de la doublure intérieure de capot lors d'un choc piéton, tout en conservant une bonne rigidité de l'ensemble du capot,
- elle permet, grâce encore à sa forme bombée cylindrique emboutie unie et continue, de garder l'inertie et une bonne cohésion du capot avant, tout en ayant une relative souplesse pour le choc piéton,
- grâce à la forme bombée cylindrique, la structure se déforme plus facilement qu'une structure de forme différente, en particulier qu'une structure à plusieurs pattes de maintien connue de l'art antérieur,
- elle permet d'améliorer, de manière importante, les résultats des essais réalisés dans le cadre de la protection des piétons et autres usagers vulnérables de la route en cas de collision avec un véhicule à moteur,
- enfin, elle est de conception simple, de fabrication aisée, et elle est fiable et économique.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Structure de capot avant de véhicule, en particulier de véhicule automobile, comportant une peau extérieure (1) et une doublure intérieure (2) reliée à la périphérie du capot, ladite doublure intérieure (2) étant en contact avec l'intérieur de la périphérie de la peau (1) uniquement par une forme bombée (3) qui s'étend selon un chemin qui suit une ligne continue (L), ladite forme bombée étant dirigée vers la surface intérieure de la peau (1) à partir de la doublure (2), **caractérisé en ce que** la forme bombée (3) s'étend selon un chemin qui suit une ligne continue (L) fermée autour d'une zone centrale ajourée de la doublure intérieure (2), et **en ce que** la forme bombée (3) présente une section, suivant un plan radial, sensiblement en arc de cercle.

2. Structure de capot avant selon la revendication 1, **caractérisée en ce que** le rayon de courbure de ladite section sensiblement en arc de cercle est relativement grand par rapport à l'épaisseur de ladite section.

3. Structure de capot avant selon l'une quelconque des revendications 1 et 2, **caractérisée en ce que** ladite forme bombée (3) est réalisée par une partie saillante de la doublure intérieure (2), de manière à former une pièce unique avec ladite doublure intérieure (2).

4. Structure de capot avant selon la revendication 1, **caractérisée en ce que** la zone centrale ajourée est formée de deux découpes (4, 5) symétriques par rapport à l'axe longitudinal (X) du capot avant.

5. Structure de capot avant selon l'une quelconque des revendications 1 à 4, **caractérisée en ce que** des zones de maintien (6, 7, 8), de petites dimensions, sensiblement planes, sont prévues pour être en contact avec la surface intérieure de la peau (1).

6. Structure de capot avant selon l'une quelconque des revendications 4 et 5, **caractérisée en ce qu'**il est prévu trois zones de maintien : une zone de maintien (7) située sur la partie de la doublure (2) séparant les deux découpes centrales (4, 5), et deux zones de maintien (6, 8) situées à la périphérie des deux découpes centrales (4, 5), dans les parties de la forme bombée (3) les plus éloignées de ladite partie séparant les deux découpes centrales (4, 5), respectivement.

7. Structure de capot avant selon l'une quelconque des revendications 1 à 6, **caractérisée en ce que** ladite forme bombée (3) est obtenue par emboutissage de la doublure intérieure (2) dans sa partie centrale.

8. Structure de capot selon l'une quelconque des revendications 1 à 7, **caractérisée en ce qu'**il est prévu, à la périphérie des découpes centrales (4, 5), des tronçons de demi canaux (9, 10), qui sont « monoblocs » avec la doublure intérieure (2) et destinés au guidage et au support de tuyaux de lave vitre du véhicule.

## Claims

1. Front bonnet structure of a vehicle, in particular a motor vehicle, comprising an outer skin (1) and an inner lining (2) which is attached to the periphery of the bonnet, said inner lining (2) being in contact with the inside of the periphery of the skin (1) solely via a cambered formation (3) which extends along a path which follows a continuous line (L), said cambered formation being directed from the lining (2) towards the inner surface of the skin (1), **characterised in that** the cambered formation (3) extends along a path which follows a continuous line (L) which is closed round a central cut-out region of the inner lining (2), and **in that** the cambered formation (3) has a section, in a radial plane, substantially corresponding to an arc of a circle.

2. Front bonnet structure according to claim 1, **characterised in that** the radius of curvature of said section substantially corresponding to an arc of a circle is relatively large compared to the thickness of said section.

3. Front bonnet structure according to either claim 1 or claim 2, **characterised in that** said cambered formation (3) is produced by a projecting portion of the inner lining (2) and is thus integral with said inner lining (2).

4. Front bonnet structure according to claim 1, **characterised in that** the cut-out central region is formed by two apertures (4, 5) which are symmetrical about the longitudinal axis (X) of the front bonnet.

5. Front bonnet structure according to any one of claims 1 to 4, **characterised in that** substantially planar holding regions (6, 7, 8) of small size are provided so as to be in contact with the inner surface of the skin (1).

6. Front bonnet structure according to either claim 4 or claim 5, **characterised in that** three holding regions are provided: one holding region (7) located on the portion of the lining (2) separating the two central apertures (4, 5) and two holding regions (6, 8) respectively located at the periphery of the two central apertures (4, 5) in the portions of the cambered formation (3) which are furthest from said portion separating the two central apertures (4, 5).

7. Front bonnet structure according to any one of claims 1 to 6, **characterised in that** said cambered formation (3) is obtained by stamping the inner lining (2) in the central portion thereof.

8. Bonnet structure according to any one of claims 1 to 7, **characterised in that** lengths of half-ducts (9, 10), which are an integral part of the inner lining (2) and are intended to guide and support pipes of the vehicle windscreen washer, are provided at the periphery of the central apertures (4, 5).

## Patentansprüche

1. Motorhaubenstruktur eines Fahrzeugs, insbesondere eines Kraftfahrzeugs, die eine Außenhaut (1) und eine Innenschale aufweist, die mit dem Rand der Haube verbunden ist, wobei die Innenschale (2) mit dem Inneren des Rands der Haut (1) nur über eine gewölbte Form (3) verbunden ist, die sich gemäß einem Weg erstreckt, der einer kontinuierlichen Linie (L) folgt, wobei die gewölbte Form ausgehend von der Schale (2) zur Innenfläche der Haut (1) gerichtet ist, **dadurch gekennzeichnet, dass** die gewölbte Form (3) sich gemäß einem Weg erstreckt, der einer kontinuierlichen Linie (L) folgt, die um eine zentrale durchbrochene Zone der Innenschale (2) geschlossen ist, und dass die gewölbte Form (3) einen im Wesentlichen kreisbogenförmigen Querschnitt gemäß einer radialen Ebene aufweist.

2. Motorhaubenstruktur nach Anspruch 1, **dadurch gekennzeichnet, dass** der Krümmungsradius des im Wesentlichen kreisbogenförmigen Querschnitts bezüglich der Dicke des Querschnitts relativ groß ist.

3. Motorhaubenstruktur nach einem der Ansprüche 1 und 2, **dadurch gekennzeichnet, dass** die gewölbte Form (3) durch einen vorstehenden Bereich der Innenschale (2) hergestellt wird, um ein einziges Bauteil mit der Innenschale (2) zu bilden.

4. Motorhaubenstruktur nach Anspruch 1, **dadurch gekennzeichnet, dass** die zentrale durchbrochene Zone von zwei Ausschnitten (4, 5) geformt wird, die bezüglich der Längsachse (X) der Motorhaube symmetrisch sind.

5. Motorhaubenstruktur nach einem der Ansprüche 1 bis 4, **dadurch gekennzeichnet, dass** im Wesentlichen ebene Haltezonen (6, 7, 8) kleiner Abmessungen für den Kontakt mit der Innenfläche der Haut (1) vorgesehen sind.

6. Motorhaubenstruktur nach einem der Ansprüche 4 und 5, **dadurch gekennzeichnet, dass** drei Haltezonen vorgesehen sind: eine Haltezone (7), die sich in dem Bereich der Schale (2) befindet, der die zwei zentralen Ausschnitte (4, 5) trennt, und zwei Haltezonen (6, 8), die sich am Rand der zwei zentralen Ausschnitte (4, 5) in den Bereichen der gewölbten Form (3) befinden, die am weitesten von dem Bereich entfernt sind, der die zwei zentralen Ausschnitte (4, 5) trennt.

7. Motorhaubenstruktur nach einem der Ansprüche 1 bis 6, **dadurch gekennzeichnet, dass** die gewölbte Form (3) durch Tiefziehen der Innenschale (2) in ihrem zentralen Bereich erhalten wird.

8. Motorhaubenstruktur nach einem der Ansprüche 1 bis 7, **dadurch gekennzeichnet, dass** am Rand der zentralen Ausschnitte (4, 5) Abschnitte von Halbkanälen (9, 10) vorgesehen sind, die mit der Innenschale (2) "einstückig" und zur Führung und zum Tragen von Scheibenwaschschläuchen des Fahrzeugs bestimmt sind.
